# EUROPÄISCHE PATENTANMELDUNG

(11) **EP 3 219 914 A1**
(43) Veröffentlichungstag der Anmeldung: **20.09.2017**
(21) Anmeldenummer: 16160847.6
(22) Anmeldetag: 17.03.2016
(51) Int. Cl.: F01D 5/14

(54) **STRÖMUNGSKANAL, ZUGEHÖRIGE SCHAUFELGITTER UND STRÖMUNGSMASCHINE**

(71) Anmelder: MTU Aero Engines AG, 80995 München (DE)
(72) Erfinder: Dr. Wolfrum, Nina, 85622 Feldkirchen (DE); Brettschneider, Markus, 85757 Karlsfeld (DE); Dr. Mahle, Inga, 81669 München (DE); Schlemmer, Markus, 84048 Mainburg / Sandelzhausen (DE); Pernleitner, Martin, 85221 Dachau (DE)

(57) **Zusammenfassung**

Die Erfindung bezieht sich auf einen Strömungskanal für eine Strömungsmaschine, der in Radialrichtung der Strömungsmaschine von zwei gegenüberliegenden Seitenwänden begrenzt ist. Mindestens eine der Seitenwände ist durch einen umfangsseitigen Spalt in zwei Abschnitte unterteilt, wobei zumindest einer der Seitenwandabschnitte eine Konturierung aufweist. Zumindest ein Konturierungsabschnitt geht in einem Winkel von -20° bis +20° in eine Spaltkante über, der zwischen einer Tangente des Konturierungsabschnitts an der Spaltkante und einer durch die Spaltkante und senkrecht zum Spalt verlaufenden Geraden abgetragen wird. Beispielhafte Strömungskanäle werden von Zwischengehäusen, Schaufelkanälen, sogenannten Inner Air Seals oder Outer Air Seals und dergleichen gebildet.

## Beschreibung

Die Erfindung betrifft einen Strömungskanal einer Strömungsmaschine nach dem Oberbegriff des Patentanspruchs 1, ein Schaufelgitter für eine Strömungsmaschine nach dem Patentanspruch 11 und eine Strömungsmaschine nach dem Patentanspruch 12.

Eine durch einen Strömungskanal geführte Fluidströmung wird regelmäßig durch einen seitlichen Druckgradienten parallel zur Seitenwandung abgelenkt. Da wandnahe Strömungsschichten aufgrund ihrer geringen Geschwindigkeit stärker als wandferne Strömungsschichten abgelenkt werden, wird eine Sekundärströmung gebildet, die einem Hauptstrom überlagert ist. Dies führt unter anderem zu Druckverlusten. Die Sekundärströmungen treten beispielsweise im Strömungskanal von Strömungsmaschinen wie Flugtriebwerken oder statischen Gasturbinen auf. Der Strömungskanal erstreckt sich vom Verdichtereintritt zum Turbinenaustritt und ist bei Strömungsmaschinen ein Strömungskanal, durch den der Hauptstrom strömt. Ein Abschnitt des Heißgaskanals wird beispielsweise vom Turbinenzwischengehäuse zwischen der Hochdruckturbine und der Mitteldruckturbine begrenzt. Bei Strömungsmaschinen in Axialbauweise verläuft ein derartiger Strömungskanal rotationssymmetrisch zur Maschinenlängsachse. Ein anderer Abschnitt des Strömungskanales wird von Schaufelgittern der Strömungsmaschinen gebildet. Die Schaufelgitter bestehen aus einer Vielzahl von in Umfangsrichtung nebeneinander angeordneten Schaufeln bzw. Schaufelblättern zwischen denen jeweils ein Schaufelkanal ausgebildet ist. Die Schaufelkanäle können nun als Teile des rotationssymmetrischen Strömungskanales angesehen werden, die in Summe den Strömungskanal ergeben. Alternativ können die Schaufelkanäle auch als einzelne Strömungskanäle angesehen werden, die in Umfangsrichtung gleichmäßig um die Maschinenachse verteilt sind und in Summe das Schaufelgitter bilden. Die Schaufelkanäle sind in Radiahichtung jeweils von einer radial äußeren gehäuseseitigen Seitenwand und von einer radial inneren nabenseitigen Seitenwand begrenzt. Gebildet werden die Seitenwände beispielsweise durch radial innere Schaufeldeckbänder und/oder durch radial äußere Schaufeldeckbänder. Zur Verringerung der Sekundärströmungen und somit zur Verringerung von Kanalwirbeln werden in die Seitenwände häufig Konturierungen in Form von Erhebungen und/oder Vertiefungen eingebracht. Aus dem Stand der Technik ist eine Vielzahl von sogenannten Seitenwandkonturierungen bekannt. Beispielhaft sind die Patente bzw. Patentanmeldungen EP 2 487 329 B1, EP 2 787 172 A2, und EP 2 696 029 B1 genannt. Eine besondere Schwierigkeit tritt an Spalten auf, die zwischen den Schaufeldeckbändern vorhanden sind und die Sekundärströmung und damit Verluste in der wandnahen Region ungünstig beeinflussen.

Grundsätzlich ist es bekannt, Seitenwandkonturierungen auch im Bereich der Spalte oder über die Spalte hinweg vorzusehen. Dabei grenzt z.B. ein Konturierungsabschnitt an den Spalt an, der am Spalt einen steilen Winkel aufweist. Der steile Winkel bewirkt, dass der Konturierungsabschnitt am Spalt sehr spitz ausläuft. Dies führt zu einer geometrischen Unstetigkeit, die Verluste in der Sekundärströmung verursacht. Diese Unstetigkeit kann durch Bearbeitungsschritte wie Schleifen oder im Betrieb durch Erosion verstärkt werden.

Es ist die Aufgabe der Erfindung, einen Strömungskanal einer Strömungsmaschine zu schaffen, der eine reduzierte Sekundärströmung im Spaltbereich zumindest einer seiner Seitenwände aufweist und dessen Konturierung im Spaltbereich robust gegen mechanische, thermische und chemische Einflüsse ist. Weiterhin ist es Aufgabe der Erfindung, ein Schaufelgitter für eine Strömungsmaschine zu schaffen, dass eine reduzierte Bildung von Sekundärströmungen aufweist, und eine Strömungsmaschine mit verbesserten Wirkungsgraden zu schaffen.

Diese Aufgabe wird gelöst durch einen Strömungskanal mit den Merkmalen des Patentanspruchs 1, durch ein Schaufelgitter mit den Merkmalen des Patentanspruchs 11 oder durch eine Strömungsmaschine mit den Merkmalen des Patentanspruch 12. Vorteilhafte Ausgestaltungen der Erfindung sind in den Unteransprüchen enthalten.

Erfindungsgemäß besteht die Lösung der Aufgabe in einem Strömungskanal für eine Strömungsmaschine, der in Radiahichtung der Strömungsmaschine von zwei gegenüberliegenden Seitenwänden begrenzt ist. Mindestens eine der Seitenwände ist durch einen umfangsseitigen Spalt in zwei Abschnitte unterteilt. Zumindest ein Abschnitt weist eine Konturierung auf. Dabei geht zumindest ein Konturierungsabschnitt in einen Winkel (β) von -20° bis +20° in eine Spaltkante über, der zwischen einer Tangente des Konturierungsabschnitts an der Spaltkante und einer durch die Spaltkante und senkrecht zum Spalt verlaufenden Geraden abgetragen wird.

Der Vorteil der erfindungsgemäßen Lösung liegt darin, dass durch den flachen Winkel eine robuste Konturierung des zumindest einen Seitenwandabschnitts am Spalt möglich ist. Der Winkelbereich von -20° bis +20° verhindert, dass senkrecht zum Spalt steile Umfangsgradienten an der Seitenwandkonturierung auftreten. Durch die Konturierung an sich wird ein statisches Druckfeld an dem Spalt derart beeinflusst, dass eine Sekundärströmung reduziert wird. Eine An- und Abströmung am Spalt wird verbessert und Strömungsverluste bei einer Überströmung des Spalts werden verringert. Durch den flachen Winkel wird eine Erosion des in die Spaltkante übergehenden Konturierungsabschnitts durch mechanische, thermische oder chemische Einwirkungen wirkungsvoll verhindert.

Bei einem Ausführungsbeispiel sind die Seitenwandabschnitte zwei radial innere Deckbänder und/oder zwei radial äußere Deckbänder, wobei an jedem Deckband ein sich im Wesentlich radial erstreckendes Schaufelblatt angeordnet. Hierdurch wird der Strömungskanal in eine Vielzahl von Schaufelkanälen unterteilt, die in Summe den Strömungskanal ergeben, bzw. die Schaufelkanäle bilden selbst eigene Strömungskanäle. Derartige Schaufelkanäle sind regelmäßig bei einem Schaufelgitter anzutreffen. Das Schaufelgitter ist bevorzugt ein turbinenseitiges Laufschaufelgitter, insbesondere im Bereich der Niederdruckturbine. Mittels der erfindungsgemäßen Konturierung lassen sich somit Störungen des Hauptstroms wirkungsvoll reduzieren.

In einer besonderen Weiterbildung der Erfindung erstreckt sich die Konturierung spaltübergreifend über die Deckbänder.

Gemäß einer vorteilhaften Ausführungsform bilden der Konturierungsabschnitt des ersten Deckbandes und der Konturierungsabschnitt des zweiten Deckbandes jeweils einen Abschnitt einer Erhebung. Eine Erhebung ist eine effiziente Form der Seitenwandkonturierung und trägt zur Stabilisierung des statischen Druckfeldes am Spalt bei. "Erhebung" bedeutet dabei eine lokale Erstreckung der einen Seitenwand in Richtung der gegenüberliegenden Seitenwand.

Gemäß einer weiteren vorteilhaften Ausführungsform bilden der Kontmierungsabschnitt des ersten Deckbandes und der Kontmierungsabschnitt des zweiten Deckbandes einen Abschnitt einer Vertiefung. Eine Vertiefung ist ebenfalls eine effiziente Form der Seitenwandkonturierung und trägt zur Sekundärstromreduzierung am Spalt bei. "Vertiefung" bedeutet dabei eine lokale Erstreckung der einen Seitenwand weg von der gegenüberliegenden Seitenwand.

Gemäß einer weiteren vorteilhaften Ausführungsform bildet der Konturierungsabschnitt des ersten Deckbandes einen Abschnitt einer Erhebung und der Konturierungsabschnitt des zweiten Deckbandes einen Abschnitt einer Vertiefung. Die Kombination einer Erhebung mit einer Vertiefung bietet einen erweiterten Gestaltungsspielraum und trägt zur Sekundärstromreduzierung am Spalt bei.

Gemäß einer weiteren vorteilhaften Ausführungsform bildet der Konturierungsabschnitt des ersten Deckbandes einen Abschnitt einer Erhebung und ein gegenüberliegender Deckbandabschnitt des zweiten Deckbandes ist nicht-konturiert. Eine Kombination einer Erhebung mit einem nichtkonturierten Deckbandabschnitt vereinfacht die Fertigung.

Gemäß einer weiteren vorteilhaften Ausführungsform bildet der Konturierungsabschnitt des ersten Deckbandes einen Abschnitt einer Vertiefung und ein gegenüberliegender Deckbandabschnitt des zweiten Deckbandes ist nicht-konturiert. Eine Kombination einer Vertiefung mit einem nicht-konturierten Deckbandabschnitt vereinfacht ebenfalls die Fertigung.

Insbesondere sind die Winkel von zwei benachbarten Konturierungsabschnitten gleich groß.

Alternativ sind die Winkel von zwei benachbarten Konturierungsabschnitten unterschiedlich groß. Unterschiedlich große Winkel ermöglichen eine differenziertere Beeinflussung der Sekundärströmung.

Ein bevorzugtes Schaufelgitter einer Strömungsmaschine hat eine Vielzahl von Schaufelkanälen. Durch diese Maßnahme wird jeweils ein statisches Druckfeld in den Schaufelkanälen des Schaufelgitters derart beeinflusst, dass eine Sekundärströmung in dem Schaufelgitter reduziert wird. Es werden Strömungsverluste verringert und eine Zuströmung auf eine nachfolgende Schaufelreihe wird verbessert.

Eine bevorzugte Strömungsmaschine hat zumindest einen erfindungsgemäßen Strömungskanal oder ein erfindungsgemäßes Schaufelgitter. Aufgrund der reduzierten Sekundärströmungen weist eine derartige Strömungsmaschine einen verbesserten Wirkungsgrad gegenüber einer Strömungsmaschine mit einem herkömmlichen Schaufelgitter auf.

Im Folgenden werden bevorzugte Ausführungsbeispiel der Erfindung anhand von schematischen Figuren näher erläutert. Es zeigen:
Fig. 1 eine schematische Draufsicht auf einen abgewickelten Umfangsabschnitt eines Schaufelgitters im Bereich eines erfindungsgemäßen Schaufelkanals bzw. Strömungskanales,
Fig. 2 eine schematische Schnittansicht von Details einer Konturierung entlang einer Linie A-A in Fig. 1,
Fig. 3 eine schematische Schnittansicht von Details einer nicht in Figur 1 gezeigten Konturierung,
Fig. 4 eine schematische Schnittansicht von Details einer Konturierung entlang einer Linie B-B in Fig. 1,
Fig. 5 eine schematische Schnittansicht von Details einer nicht in Figur 1 gezeigten Konturierung, und
Fig. 6 eine schematische Schnittansicht von Details einer weiteren nicht in Figur 1 gezeigten Konturierung.

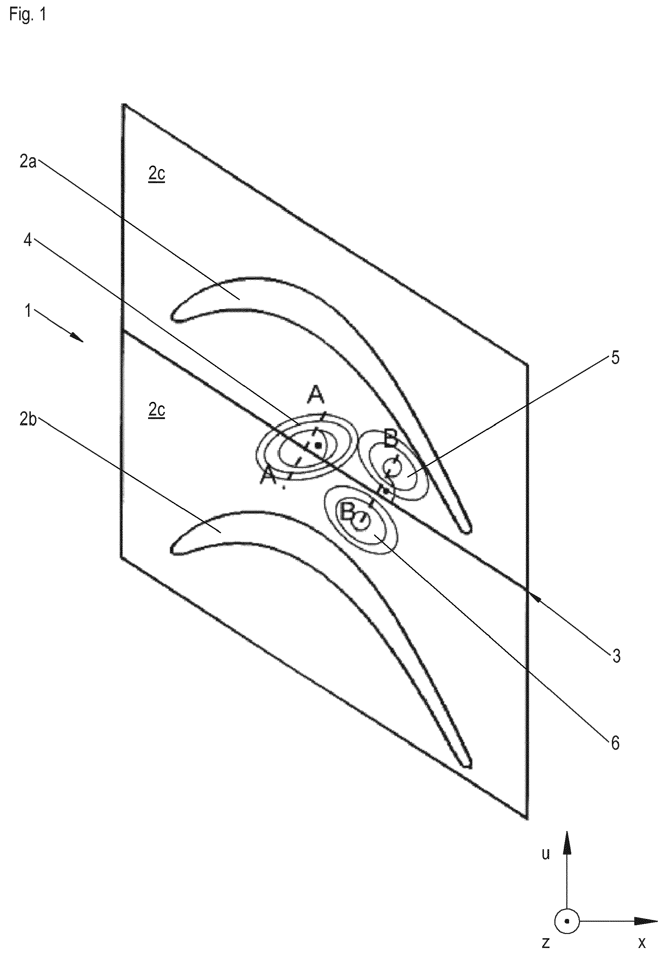

Der in Figur 1 gezeigte Schaufelkanal 1 bildet beispielsweise einen Teil eines Schaufelgitters einer axialen Strömungsmaschine. Die Strömungsmaschine ist bevorzugt ein Flugtriebwerk, ohne auf dieses beschränkt zu sein. Beispielsweise kann die Strömungsmaschine auch eine stationäre Gasturbine oder ein Schiffsantrieb sein. Die Erfindung findet jedoch auch Anwendung bei Schaufelgittern für Verdichter sowie Turbinen in Radial- oder Diagonalbauweise. Das Schaufelgitter bildet einen Abschnitt eines Ringraums der Strömungsmaschine, der von einem Hauptstrom durchströmt wird. Es besteht aus einer Vielzahl von in Umfangsrichtung u der Strömungsmaschine angeordneten Schaufelkanälen 1, die jeweils von einem Hauptstromanteil durchströmt werden. Die Hauptstromanteile werden in den Schaufelkanälen 1 in Umfangsrichtung u umgelenkt und ergeben in Summe den Hauptstrom. Das Schaufelgitter ist bevorzugt ein Laufschaufelgitter, das sich bevorzugt im Bereich einer Niederdruckturbine befindet. Der Hauptstrom ist somit bei dem hier gezeigten Ausführungsbeispiel ein Heißgasgemisch, das vereinfacht betrachtet die Strömungsmaschine in Axialrichtung x von links nach rechts durchströmt.

Begriffe wie "Axiahichtung bzw. axial", "Umfangsuchtung" und "Radialrichtung bzw. radial" beziehen sich auf die Drehachse eines Maschinenrotors der Strömungsmaschine. Da das Schaufelgitter einen Teil des Maschinenrotors bildet, sind die Begriffe direkt auf das Schaufelgitter und somit auf den Schaufelkanal 1 übertragbar.

Der Schaufelkanal 1 wird in Umfangsrichtung u der Strömungsmaschine von einem Schaufelblatt 2a und einem benachbarten Schaufelblatt 2b begrenzt. In Radialrichtung z der Strömungsmaschine wird der Schaufelkanal 1 von zwei gegenüberliegenden Seitenwänden begrenzt. Die Seitenwände sind jeweils von radial inneren und radial äußeren Deckbändern 2c der Schaufeln, sogenannten Innendeckbändern und Außendeckbändern, gebildet, die einen zwischen ihnen verlaufenden Spalt 3 in Umfangsrichtung u begrenzen. Die Deckbänder 2c sind also hier Seitenwandabschnitte bzw. Abschnitte der Seitenwände, die jeweils über den umfangsseitigen Spalt 3 voneinander beabstandet sind.

Mit anderen Worten, in Figur 1 ist ein Teil eines abgewickelten Strömungskanals 1 abgebildet. In radialer Richtung sind beispielsweise von außen nach innen die Innendeckbänder 2c sichtbar. Es können so viele Innendeckbänder 2c vorhanden sein, wie nötig ist, um den entsprechenden Umfang vollständig zu parkettieren. An diesen beiden Innendeckbändern 2c sind jeweils ein Schaufelblatt 2a bzw. 2b angeformt, die sich im Wesentlichen radial erstrecken. Diese Schaufelblätter 2a und 2b dienen dazu den in der Figur 1 von links nach rechts fließende Fluid 1 entsprechend umzulenken. Der Strömungskanal 1 wird an dieser axialen Stelle in Umfangsrichtung durch die Schaufelblätter 2a und 2b in kleinere Durchgangsbereiche eingeteilt. In Radialrichtung z der Strömungsmaschine wird der Strömungskanal 1 von zwei gegenüberliegenden Seitenwänden begrenzt. Die Seitenwände können, wie hier in der Figur 1, von mindestens zwei radial inneren Deckbändern 2c und/oder von mindestens zwei radial äußeren Deckbänder der Schaufeln gebildet sein, die einen zwischen ihnen verlaufenden Spalt 3 in Umfangsrichtung u begrenzen.

Die Deckbänder 2c weisen hier Konturierungen in Form von einer sich über den Spalt 3 erstreckenden Erhebung 4, einer an den Spalt 3 angrenzenden einseitigen Erhebung 5 und einer an den Spalt 3 angrenzenden einseitigen Vertiefung 6 auf. Die Erhebung 5 und die Vertiefung 6 liegen sich bezogen auf den Spalt 3 unmittelbar gegenüber. "Erhebung" bedeutet dabei eine radiale lokale Erstreckung des Deckbandes 2c gegenüber einem nicht-konturierten Flächenabschnitt des Deckbandes 2c, wobei die Erhebung in den Ringraum hinein ragt. Vertiefung" bedeutet eine lokale Erstreckung des Deckbandes 2c gegenüber einem nicht-konturierten Flächenabschnitt der Deckbandes 2c, wobei die Vertiefung von dem Ringraum radial weg zeigt.

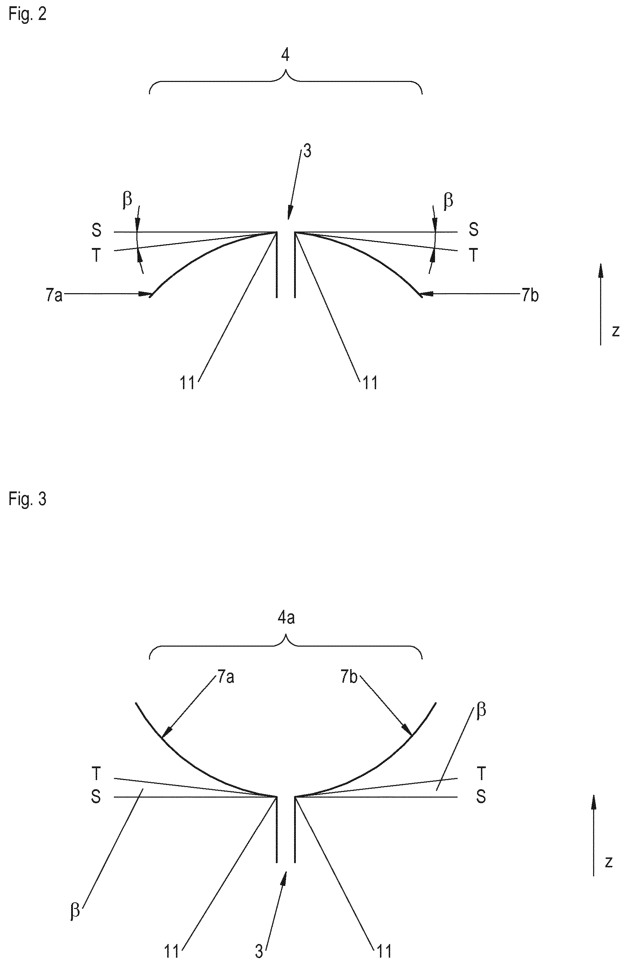

Fig. 2 zeigt eine Schnittansicht der Erhebung 4 entlang der Linie A-A in Fig. 1. Die Erhebung 4 erstreckt sich über den Spalt 3 und hat hierzu zwei an den Spalt 3 angrenzende Konturierungsabschnitte 7a, 7b. Die Konturierungsabschnitte 7a, 7b sind hier gleich ausgebildet und deuten die sich über den Spalt 3 erstreckende Erhebung 4 an. Die Konturierungsabschnitte 7a, 7b bilden jeweils einen maximalen Winkel β = 20° zwischen einer von einer Spaltkante 11 ausgehenden Geraden S und einer am Konturierungsabschnitt anliegenden Tangente T. Die Gerade S und die Tangente T liegen in der Bildebene und verlaufen somit entlang der Schnittlinie A-A in Fig. 1. Die Tangente T des Konturierungsabschnitts 7a weist eine positive Steigung aus. Die Tangente T des Konturierungsabschnitts 7b weist eine negative Steigung auf.

Mit anderen Worten, der Konturierungsabschnitt 7a geht in einen Winkel β von 0° bis +20° in die Spaltkante 11 über. Der Konturierungsabschnitt 7b geht in einen Winkel β von 0° bis -20° in die Spaltkante 11 über. Der Winkel β wird jeweils zwischen einer Tangente T des Konturierungsabschnitts 7a bzw. 7b an der Spaltkante 11 und einer durch die Spaltkante 11 und senkrecht zum Spalt 3 verlaufenden Geraden S gebildet.

Fig. 3 zeigt eine sich über einen Deckbandspalt 3 erstreckende Vertiefung 4a. Die Lage und Ausrichtung der Vertiefung 4a entspricht der Lage und Ausrichtung der Erhebung 4 in Figur 1. Die Vertiefung 4a hat einen an den Spalt 3 angrenzenden Konturierungsabschnitt 7a und einen an den Spalt 3 angrenzenden Kontmierungsabschnitt 7b. Die Konturierungsabschnitte 7a, 7b sind hier gleich ausgebildet und deuten die sich über den Spalt 3 erstreckende Vertiefung 4a an. Die Konturierungsabschnitte 7a, 7b bilden jeweils einen maximalen Winkel β = 20° zwischen einer von einer Spaltkante 11 ausgehenden Geraden S und einer am Konturierungsabschnitt anliegenden Tangente T. Die Gerade S und die Tangente T liegen in der Bildebene. Die Tangente T des Konturierungsabschnitts 7a weist eine negative Steigung aus. Die Tangente T des Konturierungsabschnitts 7b weist eine positive Steigung auf.

Mit anderen Worten, der Konturierungsabschnitt 7a geht in einen Winkel β von 0° bis -20° in eine Spaltkante 11 über. Der Konturierungsabschnitt 7b geht in einen Winkel β von 0° bis +20° in eine Spaltkante 11 über. Der Winkel β wird jeweils zwischen einer Tangente T des Konturierungsabschnitt 7a bzw. 7b an der Spaltkante 11 und einer durch die Spaltkante 11 und senkrecht zum Spalt 3 verlaufenden Geraden S abgetragen.

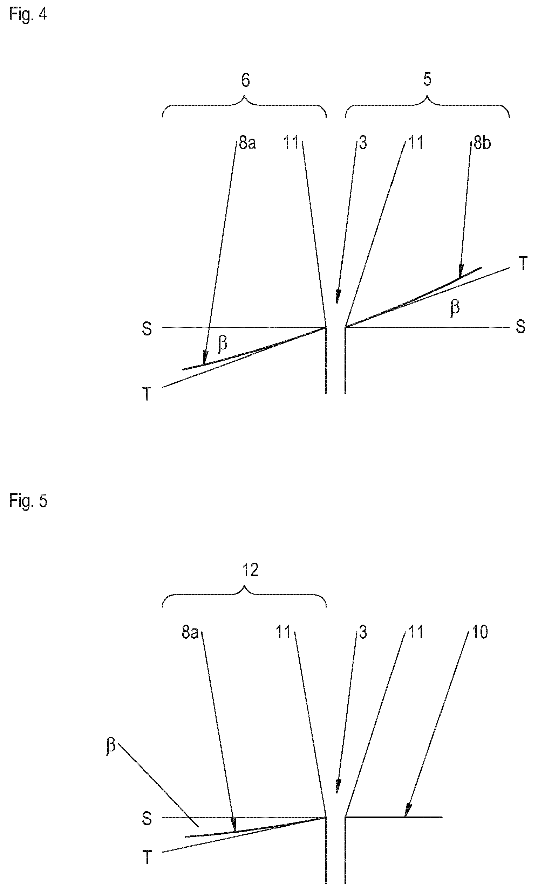

Fig. 4 zeigt eine schematische Konturierung entlang der Linie B-B in Fig. 1. An den Spalt 3 grenzt ein Konturierungsabschnitt 8a und ein Konturierungsabschnitt 8b an. Der Konturierungabschnitt 8a deutet die an der Spaltkante 11 angrenzende Vertiefung 6 an. Der Konturierungsabschnitt 8b deutet die an der Spaltkante 11 angrenzende Erhebung 5 an. Die Konturierungsabschnitte 8a, 8b bilden jeweils einen maximalen Winkel β = 20° zwischen einer von einer Spaltkante 11 ausgehenden Geraden S und einer am Kontmierungsabschnitt anliegenden Tangente T, wobei die Tangenten T des Konturierungsabschnitts 8a und des Konturierungsabschnitts 8b jeweils eine positive Steigung aufweisen. Die Gerade S und die Tangente T liegen in der Bildebene und verlaufen somit entlang der Schnittlinie B-B in Fig. 1.

Mit anderen Worten, die Konturierungsabschnitte 8a, 8b gehen in einen Winkel β von 0° bis +20° in die Spaltkante 11 über. Der Winkel β wird jeweils zwischen einer Tangente T des Konturierungsabschnitt 7a bzw. 7b an der Spaltkante 11 und einer durch die Spaltkante 11 und senkrecht zum Spalt 3 verlaufenden Geraden S abgetragen.

Fig. 5 zeigt eine Konturierung. An einen Deckbandspalt3 bzw. an dessen Spaltkante 11 grenzt ein Kontmierungsabschnitt 8a an, der eine Vertiefung 12 andeutet. Die Lage und Ausrichtung der Vertiefung 12 entspricht der Lage und Ausrichtung der Vertiefung 6 in Figur 1. Gegenüber von dem Konturierungsabschnitt 8a grenzt ein nicht-konturierter bzw. unkonturierter Deckbandabschnitt 10 an den Spalt 3 an. Der Konturierungsabschnitt 8a bildet einen maximalen Winkel β = 20° zwischen einer von der Spaltkante 11 ausgehenden Geraden S und einer am Konturierungsabschnitt anliegenden Tangente T, wobei die Tangente T des Konturierungsabschnitts 8a eine positive Steigung aufweist. Die Gerade S und die Tangente T liegen in der Bildebene.

Mit anderen Worten, Der Konturierungsabschnitt 8a geht in einen Winkel β von 0° bis +20° in die Spaltkante 11 über. Der unkonturierte Deckbandabschnitt 10 geht in einen Winkel β von 0° in die Spaltkante 11 über. Der Winkel β wird zwischen einer Tangente T des Konturierungsabschnitts 8a an der Spaltkante 11 und einer durch die Spaltkante 11 und senkrecht zum Spalt 3 verlaufenden Geraden S abgetragen.

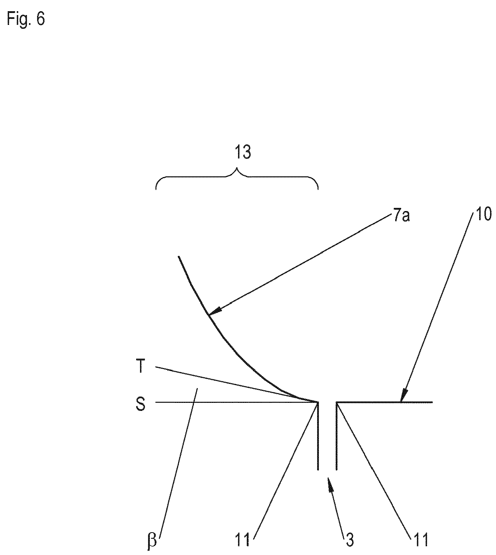

Fig. 6 zeigt eine weitere alternative Konturierung. An einen Deckbandspalt 3 grenzt ein Konturierungsabschnitt 7a an, der eine Erhebung 13 andeutet. Die Lage und Ausrichtung der Erhebung 13 entspricht der Lage und Ausrichtung der Vertiefung 6 in Figur 1. Gegenüber von dem Konturierungsabschnitt 7a grenzt ein unkonturierter Deckbandabschnitt 10 an den Spalt 3 an. Der Konturierungsabschnitt 7a bildet einen maximalen Winkel β = 20° zwischen einer von einer Spaltkante 11 ausgehenden Geraden S und einer am Kontmierungsabschnitt 7a anliegenden Tangente T, wobei die Tangente T des Konturierungsabschnitts 7a eine negative Steigung aufweist. Die Gerade S und die Tangente T liegen in der Bildebene.

Mit anderen Worten, der Konturierungsabschnitt 7a geht in einen Winkel β von 0° bis -20° in die Spaltkante 11 über. Der unkonturierte Deckbandabschnitt 10 geht in einen Winkel β von 0° in die Spaltkante 11 über. Der Winkel β wird zwischen einer Tangente T des Konturierungsabschnitts 7a an der Spaltkante 11 und einer durch die Spaltkante 11 und senkrecht zum Spalt 3 verlaufenden Geraden S abgetragen.

Die Erfindung bezieht sich auf einen Strömungskanal für eine Strömungsmaschine, der in Radiahichtung der Strömungsmaschine von zwei gegenüberliegenden und voneinander beabstandeten Seitenwänden begrenzt ist, wobei mindestens eine der Seitenwände durch einen umfangsseitigen Spalt in zwei Abschnitte bzw. Seitenwandabschnitte unterteilt ist, wobei zumindest der eine Seitenwandabschnitt eine Konturierung aufweist, wobei zumindest ein Kontmierungsabschnitt in einen Winkel von -20° bis +20° in eine Spaltkante übergeht, der zwischen einer Tangente des Konturierungsabschnitts an der Spaltkante und einer durch die Spaltkante und senkrecht zum Spalt verlaufenden Geraden abgetragen wird. Beispielhafte Strömungskanäle werden von Zwischengehäusen, Schaufelkanälen, sogenannten Inner Air Seals oder Outer Air Seals, und dergleichen gebildet.

### Bezugszeichenliste

- 1: Schaufelkanal
- 2a: Schaufelblatt
- 2b: Schaufelblatt
- 2c: Deckband / Abschnitt
- 3: Spalt / Deckbandspalt
- 4: Erhebung
- 4a: Vertiefung
- 5: Erhebung
- 6: Vertiefung
- 7a: Konturierungsabschnitt
- 7b: Konturierungsabschnitt
- 8a: Konturierungsabschnitt
- 8b: Konturierungsabschnitt
- 10: Unkonturierter Deckbandabschnitt
- 11: Spaltkante
- 12: Vertiefung
- 13: Erhebung

- z: Radialrichtung
- u: Umfangsrichtung
- x: Axialrichtung
- T: Tangente
- S: Gerade
- β: Winkel

## Patentansprüche

1. Strömungskanal (1) für eine Strömungsmaschine, der in Radialrichtung (z) der Strömungsmaschine von zwei gegenüberliegenden und voneinander beabstandeten Seitenwänden begrenzt ist, wobei mindestens eine der Seitenwände durch einen umfangsseitigen Spalt (3) in zwei Abschnitte (2c, 2c) unterteilt ist, wobei zumindest der eine Seitenwandabschnitt (2c, 2c) eine Konturierung (4, 4a, 5, 6, 12, 13) aufweist, **dadurch gekennzeichnet, dass** zumindest ein Konturierungsabschnitt (7a, 7b, 8a, 8b) in einen Winkel (β) von -20° bis +20° in eine Spaltkante (11) übergeht, der zwischen einer Tangente (T) des Konturierungsabschnitts (7a, 7b, 8a, 8b) an der Spaltkante (11) und einer durch die Spaltkante (11) und senkrecht zum Spalt (3) verlaufenden Geraden (S) abgetragen wird.

2. Strömungskanal (1) nach Anspruch 1, wobei die Seitenwandbschnitte (2c, 2c) von zwei radial inneren Deckbändern und/oder zwei radiale äußeren Deckbändern gebildet sind, und an jedem Deckband (2c) ein sich im Wesentlich radial erstreckendes Schaufelblatt (2a, 2b) angeordnet ist.

3. Strömungskanal (1) nach Anspruch 2, **dadurch gekennzeichnet, dass** sich die Konturierung (4, 4a) spaltübergreifend über die Deckbänder (2c) erstreckt.

4. Strömungskanal (1) nach Anspruch 3, **dadurch gekennzeichnet, dass** der Konturierungsabschnitt (7a) des ersten Deckbandes (2c) und der Konturierungsabschnitt (7b) des zweiten Deckbandes (2c) jeweils einen Abschnitt einer Erhebung (4) bilden.

5. Strömungskanal (1) nach Anspruch 3, **dadurch gekennzeichnet, dass** der Konturierungsabschnitt (7a) des ersten Deckbandes (2c) und der Konturierungsabschnitt (7b) des zweiten Deckbandes (2c) einen Abschnitt einer Vertiefung (4a) bilden.

6. Strömungskanal (1) nach Anspruch 2, **dadurch gekennzeichnet, dass** der Konturierungsabschnitt (8b) des ersten Deckbandes (2c) einen Abschnitt einer Erhebung (5) und der Konturierungsabschnitt (8a) des zweiten Deckbandes (2c) einen Abschnitt einer Vertiefung (6) bilden.

7. Strömungskanal (1) nach Anspruch 2, **dadurch gekennzeichnet, dass** der Konturierungsabschnitt (7a) des ersten Deckbandes (2c) einen Abschnitt einer Erhebung (13) und ein Deckbandabschnitt (10) des zweiten Deckbandes (2c) nicht-konturiert ist.

8. Strömungskanal (1) nach Anspruch 2, **dadurch gekennzeichnet, dass** der Konturierungsabschnitt (8a) des ersten Dreckbandes (2c) einen Abschnitt einer Vertiefung (12) und ein Deckbandabschnitt (10) des zweiten Deckbandes (2c) nicht-konturiert ist.

9. Strömungskanal (1) nach einem der vorhergehenden Ansprüche, **dadurch gekennzeichnet, dass** die Winkel (β) von zwei benachbarten Konturierungsabschnitten (7a, 7b, 8a, 8b) gleich groß sind.

10. Strömungskanal nach einem der Ansprüche 1 bis 9, **dadurch gekennzeichnet, dass** Winkel (β) von zwei benachbarten Konturierungsabschnitten (7a, 7b, 8a, 8b) unterschiedlich groß sind.

11. Schaufelgitter mit einer Vielzahl von als Schaufelkanälen ausgebildeten Strömungskanälen (1) nach einem der vorhergehenden Ansprüche.

12. Strömungsmaschine mit mindestens einem Strömungskanal oder Schaufelgitter nach Anspruch 11.
